# EUROPÄISCHE PATENTSCHRIFT

(11) **EP 3 241 645 B1**
(45) Veröffentlichungstag und Bekanntmachung des Hinweises auf die Patenterteilung: **03.04.2019**
(21) Anmeldenummer: 17169018.3
(22) Anmeldetag: 02.05.2017
(51) Int. Cl.: B23P 19/08, B25B 27/00, F16J 15/3268

(54) **VORRICHTUNG, BAUKASTENSYSTEM UND VERFAHREN ZUM EINSETZEN EINES ELASTISCHEN RINGS IN EINE INNENLIEGENDE NUT**
DEVICE, MODULAR SYSTEM AND METHOD FOR INSERTING AN ELASTIC RING INTO AN INTERNAL GROOVE
DISPOSITIF, SYSTÈME MODULAIRE ET PROCÉDÉ D'INSERTION D'UNE BAGUE ÉLASTIQUE DANS UNE RAINURE INTERNE

(30) Priorität: 04.05.2016 DE 102016108336
(43) Veröffentlichungstag der Anmeldung: 08.11.2017
(73) Patentinhaber: Ohrmann Montagetechnik GmbH, 59519 Möhnesee (DE)
(72) Erfinder: OHRMANN, Cölestin, 59519 Möhnesee (DE)
(74) Vertreter: Prinz & Partner mbB

(56) Entgegenhaltungen:
- EP-A1- 2 258 514
- DE-A1- 3 710 829
- DE-A1- 10 204 733
- JP-A- H1 133 842
- JP-A- H03 251 325
- JP-A- H09 323 226
- US-A- 4 571 804
- DATABASE WPI Week 198511 Thomson Scientific, London, GB; AN 1985-067743 XP002773234, -& SU 1 110 596 A (MINSK CAR IND EXP) 30. August 1984 (1984-08-30)

## Beschreibung

Die Erfindung betrifft eine Vorrichtung, eine Baugruppe sowie ein Verfahren zum Einsetzen eines elastischen Ringes in eine innenliegende Nut in einer Werkstücköffnung.

Elastische Ringe, die in innenliegende Nuten in Werkstücken eingesetzt werden, sind üblicherweise aus einem Elastomer und dienen als Dichtringe. Sie haben üblicherweise ein Durchmesser/Dickenverhältnis von > 10 und üblicherweise auch eine Härte < 70 Shore. Die Erfindung ist jedoch nicht auf diese Werte limitiert, diese Werte definieren aber Bereiche, bei denen die elastischen Ringe besonders instabil und damit schwer automatisch in eine innenliegende Nut auf automatische Weise eingebracht werden können. Die häufigste Art dieser Dichtringe sind O-Ringe. Noch schwieriger einzubauen sind Ringe mit Dichtlippen, denn die Lippen selbst sind extrem labil und erschweren die automatische Montage noch einmal.

Damit die elastischen Ringe überhaupt in innenliegende Nuten eingebaut werden können, müssen sie erst deformiert und in die Werkstücköffnung in den Bereich der Nut entweder gezogen oder geschoben werden. Vom "Ziehen" eines Rings spricht man, wenn die den Ring bildende "Schnur" zugbelastet ist, und vom "Schieben", wenn die Schnur druckbelastet ist. Ein Problem bei der Einbringung des Rings in die Nut entsteht, wenn der Ring im Bereich der Nut liegt, dann aber auf dem kompletten Umfang in die Nut gedrückt werden muss. Hier wird der Ring gestaucht, was bedeutet, dass die Druckbelastung auf die Schnur zu einer Querschnittsvergrößerung der Schnur in bestimmten Bereichen führt. Dies ist abträglich für das Verlagern des Rings in der Nut selbst. Es entstehen dabei Kräfte, die unkontrollierbare Verformungen des Rings hervorrufen und beim Einschieben des Rings in die Nut zu Beschädigungen des Rings führen können. Insbesondere die Reibkräfte zwischen Ring und Werkstück, der Umfang der Stauchung, aber auch die schwankenden Qualitäten der Ringe bezüglich ihres Materials, ihrer Oberflächengüte und ihrer Härte führen dazu, dass das Stauchen der Ringe die automatisierte Montage extrem erschwert.

Aus der DE 37 10 829 A1 ist eine Vorrichtung zum Montieren von Dichtringen bekannt, bei der ein Werkzeug auf das Werkstück aufgesetzt wird, wobei ein axial verschiebbarer Finger den Dichtring an einer Stelle auf seinem Umfang erfasst und ihn dann in eine Übergangshülse zieht, deren Innenquerschnitt dem Innenquerschnitt der Werkstücköffnung entspricht. Dabei wird der Ring zu einem schräg in der Hülse liegenden Oval deformiert. Wenn der Haltebereich des Rings, an dem der Finger angreift, die Nut erreicht hat, wird dieser Haltebereich in die Nut durch eine Wippenmechanik am Finger gedrückt. Ein nacheilender Schieber schiebt dann den Rest des Rings in Richtung Nut, damit dieser dann in die Nut gleiten kann. Dabei muss der Ring auch im Nutgrund gleiten können, um Ausgleichsbewegungen durchzuführen, was durch hohe Reibung im Bereich des Nutgrunds erschwert werden könnte. Gleitmittel insbesondere in Form von Öl soll und kann Probleme reduzieren. Die bekannte Vorrichtung hat sich in der Praxis stark durchgesetzt.

Darüber hinaus gibt es aber Alternativlösungen, die eine ganz andere Technik nutzen. Hierbei wird der Ring in der Ringebene (Radialebene bezogen auf den nicht deformierten Zustand) gestaucht, sodass der Ringdurchmesser verkleinert wird. Dabei muss der Ring zwischen zwei Platten gehalten werden, denn er soll aus der Ebene nicht ausbeulen. Eine entsprechende Stauchschublade zeigt die DE 43 19 442 A1. Hier wird der Ring radial so gleichmäßig nach innen gestaucht, dass er seine runde Form behält. Der Ring muss dann zwischen zwei ebenen Flächen gehalten in die Werkstücköffnung eingeführt werden. Sobald er die Nut erreicht hat, kann sich der Ring entspannen und springt aufgrund seiner Eigenspannung in die Nut. Dieses Verfahren hat bestimmte Grenzen bezüglich der Abmessungen und Steifigkeiten der Ringe, da es einen hohen Stauchungsgrad erforderlich macht.

Wenn dieser Stauchungsgrad nicht erreicht werden kann, können andere Montagevarianten eingesetzt werden, bei denen der Ring ebenfalls in seiner Ebene bleibt und nur in der Ebene verformt wird. Beispielsweise ist angedacht, den Ring radial von einer Stelle aus nach innen zu drücken, sodass er eine Nierenform einnimmt. Wieder andere Ideen sehen vor, den Ring mit mehreren Fingern in der Ringebene nach innen zu drücken, um ihm eine Kleeblattform zu geben. Bei allen diesen Varianten springt der Ring aufgrund seiner Elastizität und Eigensteifigkeit bei Erreichen der Nut möglichst über den gesamten Umfang gleichmäßig in die Nut.

Aus der SU 1110596 A (siehe auch DATABASE WPI Week 198511 Thomason Scientific, London GB; AN 1985-067743) ist eine gattungsgemäße Vorrichtung bekannt, bei der der Dichtring durch innen an ihm anliegende Streits Finger gehalten wird. Die Positionierung des Rings in axialer Richtung in der Vorrichtung und in der Werkstücköffnung erfolgt dabei durch einen konischen Teller, der axial verschieblich am Schieber angebracht ist, in Einführrichtung vor dem Ring liegt und in die Werkstücköffnung eingeführt wird, um als axialer Anschlag und Führungsfläche für den Ring zu fungieren. Der konische Teller muss einen Außendurchmesser haben, der nur geringfügig kleiner als der Innendurchmesser der Werkstücköffnung ist, damit der Ring nicht in den Zwischenraum hineingedrückt werden kann, sondern in die Nut geschoben wird.

Einen zur SU 1110596 A sehr ähnlichen Stand der Technik offenbart die US 4 571 804 A.

Die JP H 09 323226 A beschreibt eine Vorrichtung zum Einsetzen eines elastischen Ringes mit fingerartigen Fortsätzen, an deren stirnseitigen Enden der Ring in einer Aufnahme gehalten wird.

Die DE 102 04 733 A1 zeigt ebenfalls eine Vorrichtung zum Einsetzen eines elastischen Ringes mit elastisch gelagerten Fingern zum Halten des Ringes und einem nacheilenden, hülsenförmigen Schieber. Wie bei den zuvor genannten Druckschriften drückt der Schieber mit seiner planen Stirnseite die nacheilenden Bereiche des sich in der Werkstücköffnung wellenförmig verformenden Ringes tiefer in die Werkstücköffnung bis zur Nut, wo die nacheilenden Bereiche dann aufgrund der Federelastizität des Ringes nach außen in die Nut schnappen.

Weiteren Stand der Technik zeigen die JP H03 251325 A, die EP 2 258 514 A1 und die JP H 11 33842 A.

Aufgabe der Erfindung ist es, eine Vorrichtung, ein Baukastensystem sowie ein Verfahren zum Einsetzen eines elastischen Ringes, insbesondere eines Dichtringes, in eine innenliegende Nut einer Werkstücköffnung zu schaffen, die extrem prozesssicher und universeller einsetzbar sind im Hinblick auf die geometrischen und stofflichen Eigenschaften des Ringes sowie die Geometrien und Abmessungen des Ringes im Verhältnis zu den Abmessungen der Nut und der Werkstücköffnung. Im Stand der Technik ist es nämlich notwendig, die Vorrichtung sehr genau auf den spezifischen Ring und das Werkstück abzustimmen.

Die Aufgabe wird durch eine Vorrichtung nach Anspruch 1 gelöst.

Die Erfindung nutzt nicht die zuvor erwähnte, in den letzten Jahren sehr häufig angewandte Technik, dass der Ring in der Ringebene deformiert wird. Die Erfindung geht einen völlig anderen Weg, indem mehrere Halter vorgesehen sind, die den Ring aufnehmen und damit während des Einschiebens in die Werkstücköffnung lagefixieren. Der Ring wird aus der Ringebene heraus deformiert und erhält auch keine ovale Form, wie dies in der DE 37 10 829 A1 erläutert wird, sondern eine Art umlaufende Wellenform oder Kronenform. Die axiale Erstreckung des so deformierten Rings ist damit deutlich geringer als im Stand der Technik. Damit muss der nachlaufende Schieber die nacheilenden Bereiche des Rings über einen wesentlich geringeren axialen Vorschubbereich bewegen, was die Reproduzierbarkeit des Montagevorgangs deutlich erhöht, Montageprobleme erheblich reduziert und eine gleichbleibende Qualität der optimierten Lage des Ringes in der Nut sicherstellt. Die Rampenfläche schiebt die nacheilenden, gebogenen Bereiche des Ringes in die Nut.

Die erfindungsgemäße Vorrichtung ist extrem einfach aufgebaut, mit wenigen Teilen. Die Wellen- oder Kronenform des deformierten Rings beim Zustellen in Richtung Nut erlaubt eine große Toleranz bezüglich der verwendeten Ringe, da die Gesamtlänge der "Schnur" auf einem axial sehr kurzen Bauraum sehr unterschiedlich sein kann. Das bedeutet, die Vorrichtung ist für unterschiedliche Ringabmessungen und Nutabmessungen innerhalb eines größeren Bereichs einsetzbar, als dies in den bekannten Vorrichtungen der Fall ist. Eine aufwendige Umrüstung muss dann nicht erfolgen, vielmehr kann dieselbe Vorrichtung in ganzen Teilefamilien (ähnliche Ringabmessungen und ähnliche Nutabmessungen) eingesetzt werden.

Einige oder sogar alle Aufnahmen sollten in derselben Radialebene liegen, d. h., die in diesen Aufnahmen liegenden Haltebereiche des Ringes erreichen gleichzeitig die Nut. Es kann in gewissen Fällen auch vorteilhaft sein, die eine oder andere Aufnahme nacheilen zu lassen, was auf die Steifigkeit und Dimension des Ringes ankommt. Eine solche Anpassung ist relativ einfach realisierbar, da hier nur andere Halter ausgeführt werden müssen.

Die Halter sind insbesondere als Gleichteile ausgeführt, was die Kosten für die Herstellung der Vorrichtung reduziert.

Die bevorzugte Ausführungsform der Erfindung sieht vor, dass die Halter als langgestreckte Finger ausgebildet sind.

Die Halter können über den Umfang hinweg gleichmäßig oder ungleichmäßig verteilt sein, auch dies ist sehr einfach anpassbar und abhängig von den Rahmenbedingungen, insbesondere den Eigenschaften und der Geometrie und Abmessung des Ringes.

Wie bereits erwähnt, ist wenigstens ein Schieber vorgesehen. Das bedeutet, es kann ein einziger Schieber mit einer Kontaktfläche verwendet werden, die die nacheilenden, gebogenen Bereiche vor sich herschiebt.

Eine andere Ausführungsform der Erfindung sieht vor, dass mehrere Schieber vorhanden sind, beispielsweise kann in jedem Zwischenraum zwischen benachbarten Haltern ein Schieber vorhanden sein.

Ferner kann der Schieber radial nach außen bewegliche Kontaktflächen für den Ring haben, zum Verändern der radialen Ausdehnung des Schiebers.

Eine Variante der Erfindung sieht vor, dass der wenigstens eine Schieber und die Halter nacheinander axial verfahrbar sind, insbesondere unabhängig voneinander. Das bedeutet, die Halter können dann, wenn sie die Haltebereiche in die Nut eingebracht haben, diese Haltebereiche anschließend in der Nut sichern, wenn der Schieber abschließend axial und relativ zu den Haltern zugestellt wird.

Sämtliche Bewegungen der Teile können manuell oder motorisch erfolgen, beispielsweise auch über Pneumatikzylinder, Hubmagnete, Federn, Elektromotoren oder dergleichen. Gerade pneumatische Antriebe erweisen sich hierbei als robust, kostengünstig und universell.

Die Halter wiederum können alle gemeinsam, in Gruppen gemeinsam oder auch unabhängig voneinander axial und/oder radial relativ zum Rest der Vorrichtung beweglich gelagert sein. Sie können mechanisch miteinander gekoppelt sein, insbesondere starr miteinander gekoppelt sein oder voneinander komplett entkoppelt. Damit lassen sich unterschiedliche Bewegungsfolgen erzielen. Die radiale Beweglichkeit ist insbesondere vorteilhaft, um die Halter im Bereich der Aufnahme an unterschiedliche Durchmesser der Werkstücköffnung anpassen zu können und um bei Verwendung eines trichterförmigen Einlasses den Halter während des Verfahrens längs des Trichters axial nach innen zu bewegen, sodass er sich dessen Form und Kontur anpassen kann.

Die Bewegung der Halter kann, wie gesagt, über einen oder mehrere Antriebe erfolgen, und/oder über Kulissenführungen oder eine Kulissenführung. Die Bewegung der Finger kann als Parallelbewegung, als Schwenkbewegung oder als Kombination derselben erfolgen. Unter Parallelbewegung ist eine Bewegung in Axialrichtung zu verstehen. Die Bewegung der Halter radial nach außen kann durch eine federnde Vorspannung realisiert werden. In diesem Fall ist sichergestellt, dass die nach außen drängenden Halter an der Innenseite entweder eines Mundstücks als Teil der Vorrichtung oder an der Innenseite der die Werkstücköffnung bildenden Wand anliegen und kein Spalt entsteht, in den der Ring hineindrängt und zum Verklemmen führt.

Zur Lagerung der Halter ist ein Träger vorgesehen, der üblicherweise beim Einsetzen des Ringes in die Werkstücköffnung außerhalb der Werkstücköffnung bleibt. An diesem Träger kann beispielsweise eine Schwenklagerung für Halter vorhanden sein.

Um den Schieber möglichst gut zu den Haltern auszurichten, ist angedacht, den Träger mit einer Führung für den Schieber zu versehen. Der Träger ist beispielsweise das dem Werkstück abgewandte stirnseitige Ende der Vorrichtung, durch die sich dann eine Führungsbohrung erstreckt. Ein Antriebszapfen, der sich durch die Führungsbohrung erstreckt, kann von außen betätigt werden und ist zwischen dem Träger und dem Werkstück am Schieber befestigt. Natürlich kann der Schieber auch einstückig mit dem Antriebszapfen verbunden sein. Schieber und Halter sind so ausgerichtet, dass der Schieber zumindest während der Verschiebebewegung in die Werkstücköffnung radial zwischen den Haltern angeordnet ist. Das bedeutet, in Umfangsrichtung ist zwischen den Haltern Platz für den nachrückenden Schieber vorhanden.

Eine besonders einfache und kompakte Ausführungsform, die noch dazu für wenig Spalte zwischen den einzelnen Teilen sorgt, besteht darin, dass der Schieber zumindest einen Schlitz zur Aufnahme zumindest eines Halters hat. Dieser Schlitz erstreckt sich axial an der Mantelfläche des Schiebers, sodass der Halter in den Schlitz mehr oder weniger stark eintauchen kann. Dies ist insbesondere in Kombination mit der Schwenklagerung der Halter vorteilhaft.

Die erfindungsgemäße Vorrichtung ist insbesondere mit einem Mundstück ausgestattet, welches an das Werkstück angesetzt wird und mit einer Führungsöffnung zum Durchschieben des Ringes in Richtung Werkstücköffnung und zum Verformen des Rings in die Wellen- oder Kronenform versehen ist. Die Führungsöffnung sollte bevorzugt keinen größeren Durchmesser als die Werkstücköffnung haben. Das Mundstück dient dazu, außerhalb des Werkstücks bereits den Ring in die gewünschte Transportgeometrie zu bringen, in der der Ring dann in die Werkstücköffnung eingebracht und darin verschoben wird.

Das Mundstück ist beispielsweise eine Art Hülse mit spezieller Innengeometrie.

Auf der dem Werkstück zugewandten Seite endet die Führungsöffnung in einem sogenannten Auslassende, über welches der Ring in die Werkstücköffnung bewegt wird. Das entsprechende, dem Werkstück abgewandte Ende der Führungsöffnung ist das Einlassende für den Ring. Die Führungsöffnung sollte sich zumindest über Abschnitte in Richtung zum Auslassende hin verengen, damit der in den Aufnahmen in den Haltern aufgenommene Ring auf einen zunehmend kleiner werdenden Außendurchmesser gebracht und gleichzeitig aus der Ebene heraus verformt wird, um die Wellen- oder Kronenform zu erhalten. Ein Verkanten des Rings ist damit ausgeschlossen, weil der Ring nicht abrupt auf einen kleineren Durchmesser gebracht wird, sondern kontinuierlich und geführt einen kleineren Außendurchmesser erlangt, wodurch das Material aus der Ringebene bewegt wird, sodass mit kleinerem Durchmesser die Wellenform immer stärker ausgeprägt wird.

Natürlich muss der sich verengende Abschnitt der Führungsöffnung nicht von einer Stirnseite zur entgegengesetzten Stirnseite des Mundstücks kontinuierlich verlaufen. Es ist auch möglich, beispielsweise im Bereich des Einlassendes zuerst eine Verjüngung vorzusehen und dann im Bereich vor dem Auslassende zu einem kontinuierlichen, insbesondere kreiszylindrischen Abschnitt zu gelangen, in welchem der Ring in seiner endgültigen Transportgeometrie ist und auch in dieser in die Werkstücköffnung überführt werden kann.

Der sich verengende Abschnitt der Führungsöffnung kann beispielsweise kegelförmig sein oder, allgemein, konisch verjüngt sein. Andere Varianten sehen vor, dass innenseitig vorstehende Rippen vorhanden sind, die als Gleitkörper dienen und die wiederum die Kontaktflächen für die dann später gebogenen Bereiche darstellen. Damit wird die Reibungsfläche verringert. Diese Rippen verlaufen dann mit ihrer radialen Innenseite in Richtung zum Auslassende hin zumindest abschnittsweise immer näher zur Mittelachse. Das bedeutet, der durch die Rippen dem Ring zugestandene Außendurchmesser wird durch die zur Mittelachse hin verlaufenden Rippen verringert.

Die Rippen müssen nicht einstückiger Bestandteil des Rests des Mundstücks sein. Sie können auch aus einem besonders vorteilhaften Material sein oder besonders beschichtet sein. Eine Idee der Erfindung besteht darin, die Rippen als Gleitleisten auszubilden, die an einer Wand des Mundstücks angebracht oder in eine Nut, und zwar eine Axialnut, der Wand eingesetzt sind. Darüber hinaus können die Rippen auch als Drahtbiegeteile ausgeführt sein.

Da das Mundstück innenseitig komplexe Geometrien aufweisen kann, um die Reibung oder die Reibstellen zu optimieren, kann es vorteilhaft sein, das Mundstück als im 3D-Druck hergestelltes Teil auszuführen.

Die Halter sind insbesondere als Wippen ausgeführt, mit einem vorderen Abschnitt, der dann die Aufnahmen hat, und einem hinteren Abschnitt, an dem ein Antrieb angreifen kann.

Um die Vorrichtung noch einfacher auf unterschiedliche Ringgeometrien und Haltebereichsgeometrien anpassen zu können, können in einem Baukastensystem mehrere Mundstücke vorgesehen sein, die sich durch unterschiedliche Durchmesser der Führungsöffnungen im Bereich des Auslassendes unterscheiden, wobei dieselben Schieber und Halter mit jedem der Mundstücke koppelbar sind, sodass die Halter beim Einschieben angrenzend an ihre Aufnahmen die Innenseite der die jeweilige Führungsöffnung bildenden Wand des Mundstücks kontaktieren können. Durch die Beweglichkeit der Halter lassen sich die Halter an unterschiedliche Führungsöffnungen anpassen. Der Schieber kann ebenfalls zur Anpassung beispielsweise elastisch einfedernde Randabschnitte oder nach außen bewegliche Kontaktflächen haben, die sich an die unterschiedlichen Durchmesser der Führungsöffnungen anpassen können.

Die Erfindung betrifft darüber hinaus auch ein Verfahren zum Einsetzen eines elastischen Rings in eine innenliegende Nut in einer Werkstücköffnung, unter Verwendung der Vorrichtung nach der Erfindung. Das erfindungsgemäße Verfahren weist zumindest folgende Schritte auf:
Der elastische Ring wird von seiner radialen Innenseite aus mit Haltebereichen in nach außen offene Aufnahmen von Haltern eingesetzt,
die Halter werden in eine Führungsöffnung eines Mundstücks bewegt, wobei die Führungsöffnung durch eine Wandinnenseite begrenzt ist,
wobei sich die Führungsöffnung zumindest abschnittsweise in Richtung zu ihrem dem Werkstück zugewandten Auslassende verengt und die Halter im Mundstück so positioniert werden, dass der elastische Ring die Wandinnenseite zumindest mit seinen zwischen den in den Aufnahmen im Halter liegenden Bereichen berühren kann und diese Bereiche beim Bewegen in das Mundstück hinein entgegen der Einführrichtung gebogen werden und nacheilende, gebogene Bereiche bilden,
der Ring wird mittels der Halter durch das Mundstück hindurch in die Werkstücköffnung bewegt,
im Bereich der Nut werden die Haltebereiche in die Nut überführt, und
ein Schieber wird in die Werkstücköffnung bewegt, um die nacheilenden, gebogenen Bereiche des Rings axial zur Nut zu drücken, wobei der Schieber mittels der Rampenfläche die nacheilenden, gebogene Bereiche des Rings (12) in die Nut schiebt.

Darüber hinaus kann das erfindungsgemäße Verfahren durch die zuvor im Zusammenhang mit der Vorrichtung erwähnten Schritte weiter verbessert werden.

Das erfindungsgemäße Verfahren wird auch dadurch optimiert, dass mehrere Mundstücke vorgesehen sind, die eine Art Adapterset darstellen. Diese Mundstücke haben unterschiedliche Durchmesser bezüglich der Führungsöffnungen im Bereich des Auslassendes. Es wird derselbe Schieber und dieselben Halter verwendet, um unterschiedliche Ringe abhängig vom Durchmesser der Werkstücköffnung mittels eines angepassten Mundstücks zusammen mit dem Schieber und dem Halter in die Nut einzusetzen.

Das Mundstück kann generell zylindrisch, kegelig, sternförmig oder auch anderweitig ausgeführt sein. Sternförmig bezieht sich auf den Radialschnitt gesehen.

Die Erfindung zeichnet sich dadurch aus, dass durch Deformation des Ringes zu einer dreidimensionalen Wellen- oder Kronenform der Ring in das Werkstück transportiert werden kann, ohne den Ring zu stauchen oder zu knicken. Diese Form des Ringes ermöglicht es auch, den nacheilenden Schieber einzusetzen, ohne den Ring übermäßig zu stauchen oder zu knicken, wenn er in die Nut geschoben wird. Es können durch die Erfindung ferner auch Ringe automatisch montiert werden, deren großes Volumen eine Stauchung oder Verformung in der bekannten Stauchschublade nicht zulassen würde, oder die bei der erforderlichen Stauchung oder Verformung geschädigt werden würden, was insbesondere bei empfindlichen Dichtkanten (Lippendichtungen) der Fall ist.

Weitere Merkmale und Vorteile der Erfindung ergeben sich aus der nachfolgenden Beschreibung und aus den nachfolgenden Zeichnungen, auf die Bezug genommen wird. In den Zeichnungen zeigen:
- Figur 1 eine Perspektivansicht einer Ausführungsform einer nicht unter den Schutzumfang des vorliegenden Patents fallenden Vorrichtung in einem ersten Verfahrensschritt vor dem Einschieben des Ringes in die Werkstücköffnung,
- Figur 2 eine Teilschnittansicht der Vorrichtung nach Figur 1,
- Figur 3 eine Längsschnittansicht durch die Vorrichtung nach Figur 1,
- Figur 4 eine Längsschnittansicht durch die Vorrichtung nach Figur 1 in einem späteren Verfahrensschritt, beim Einschieben in die Werkstücköffnung,
- Figur 5 eine Längsschnittansicht durch die Vorrichtung nach Figur 1 bei abgeschlossener Montage,
- Figur 6 eine Figur 2 entsprechende Teilschnittansicht durch eine erfindungsgemäße Vorrichtung gemäß einer ersten Ausführungsform,
- Figur 7 eine Längsschnittansicht durch die Vorrichtung nach Figur 6 vor dem Einschieben des Ringes in das Werkstück,
- Figur 8 eine Längsschnittansicht durch die Vorrichtung nach Figur 6 in einem späteren Verfahrensschritt, beim Einschieben in die Werkstücköffnung,
- Figur 9 eine Längsschnittansicht durch die Vorrichtung nach Figur 6 bei abgeschlossener Montage,
- Figur 10 eine Teilschnittansicht durch die erfindungsgemäße Vorrichtung gemäß der zweiten Ausführungsform entsprechend der Ansicht von Figur 2,
- Figur 11 eine Längsschnittansicht durch die Vorrichtung nach Figur 10 vor dem Einschieben des Ringes in das Werkstück,
- Figur 12 eine Längsschnittansicht durch die Vorrichtung nach Figur 10, in einem späteren Verfahrensschritt, beim Einschieben in die Werkstücköffnung,
- Figur 13 eine Längsschnittansicht durch die Vorrichtung nach Figur 10 bei abgeschlossener Montage, und
- Figur 14 eine Perspektivansicht des Schiebers, der in der zweiten Ausführungsform der erfindungsgemäßen Vorrichtung eingesetzt ist.

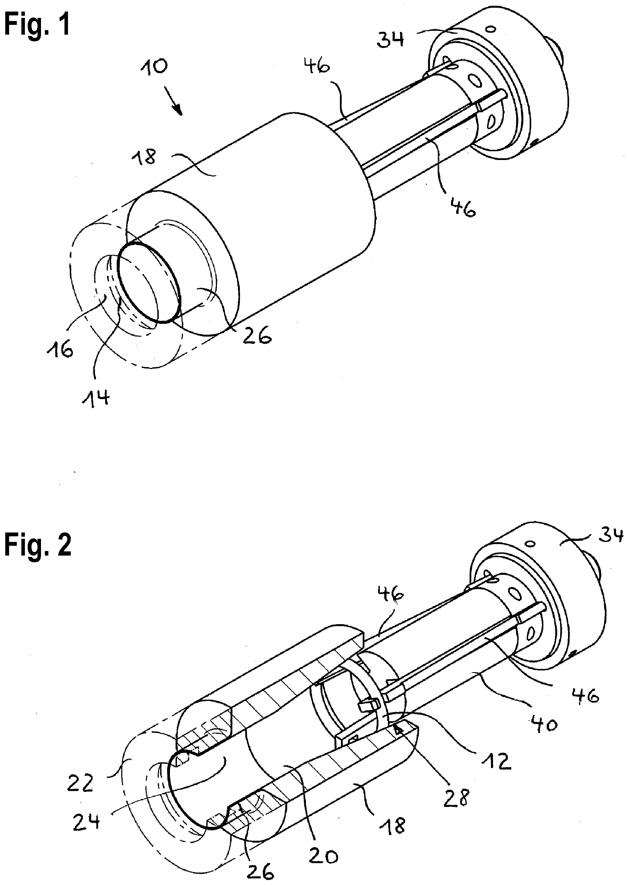

In den Figuren 1 und 2 ist eine Vorrichtung 10 zum Einsetzen eines elastischen Ringes 12, insbesondere eines Dichtringes wie beispielsweise eines O-Ringes, in eine innenliegende Nut 14 in einer Werkstücköffnung 16 dargestellt. Die Vorrichtung umfasst ein sogenanntes Mundstück 18, hier in Form einer Art Hülse, die in ihrem Inneren eine Führungsöffnung 20 aufweist. Die Führungsöffnung 20 hat zwei entgegengesetzte Enden, nämlich ein dem Werkstück 22 zugewandtes Auslassende 24, welches im vorliegenden Fall durch einen dünnwandigen Einschubzylinder 26, welcher in die Werkstücköffnung 16 eingeschoben wird, verlängert ist. Das entgegengesetzte Ende der Führungsöffnung 20 ist das Einlassende 28.

Die Führungsöffnung 20 hat an ihrem Auslassende 24 im Wesentlichen, bis auf die minimale Wanddicke des Einschubzylinders 26, den Durchmesser der Werkstücköffnung 16. Ohne den Einschubzylinder 26 hätte die Führungsöffnung 20 im Bereich des Auslassendes 24 auch den Durchmesser der Werkstücköffnung.

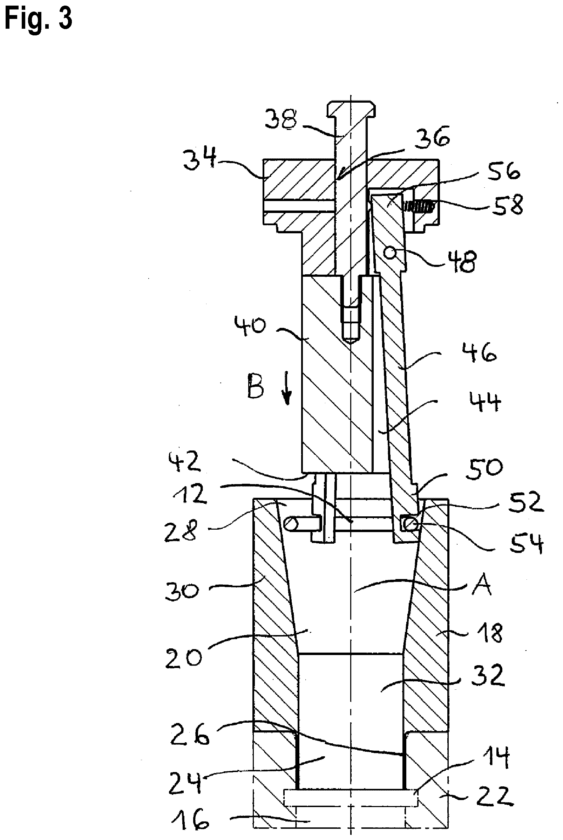

Wie in den Figuren 2 und 3 zu sehen ist, verjüngt sich die Führungsöffnung 20 vom Einlassende 28 über einen ersten Bereich in Richtung zum Auslassende 24. In der dargestellten Ausführungsform verläuft die Innenseite der entsprechenden Wand 30 über einen Abschnitt konusförmig, hier kegelförmig, bis ein kreiszylindrischer Abschnitt 32 erreicht ist, ab dem sich der Durchmesser der Führungsöffnung 20 bis zum Auslassende 24 nicht mehr ändert.

Die Vorrichtung umfasst darüber hinaus einen Träger 34, der zur Betätigung und zum Antrieb der Vorrichtung dient. Der Träger 34 ist im vorliegenden Fall beispielsweise im Wesentlichen scheibenförmig ausgeführt und hat eine mit der Mittelachse A der Führungsöffnung 20 und der Werkstücköffnung 16 koaxial ausgeführte Führung 36 für einen Betätigungsstößel 38 eines Schiebers 40. Der Betätigungsstößel 38 ragt durch die Führung 36 hindurch und hat ein rückseitig vorstehendes Betätigungsende sowie ein entgegengesetztes Ende, das mit dem Schieber 40 gekoppelt ist, beispielsweise in den Schieber 40 eingeschraubt ist (siehe Figur 3).

Der Schieber 40 ist ein im Wesentlichen zylindrisches Teil (siehe Figuren 1 und 2), welches in der vorliegenden Ausführungsform eine plane, in einer Radialebene liegende, stirnseitige Kontaktfläche 42 aufweist, die in Richtung zum Werkstück weist.

Im Schieber 40 sind mehrere Axialschlitze 44 vorgesehen, in welchen langgestreckte, fingerartige Halter 46 zumindest teilweise untergebracht sind (siehe Figuren 2 und 3).

Auf dem Umfang des Schiebers 40 verteilt, und zwar hier gleichmäßig, jedoch theoretisch auch ungleichmäßig verteilt, sind mehrere Halter 46 und entsprechend mehrere Schlitze 44 vorgesehen. Insbesondere sind drei Halter 46 vorhanden.

Die Halter 46 sind insbesondere Gleichteile.

Darüber hinaus sind die Halter 46 in dieser Ausführungsform als Wippen ausgeführt, mit zwei Armen und einem Schwenklager 48 im Träger 34. Auch der Träger 34 hat entsprechende Ausnehmungen zur Aufnahme oder teilweisen Aufnahme der Halter 46, wie in Figur 3 gut zu erkennen ist. Das Schwenklager 48 sitzt im Übrigen so im Träger 34, dass der Halter 46 radial nach außen und innen schwenken kann.

Die Halter 46 haben einen langen Arm, der vom Schwenklager 48 bis zu einem hier optional in Radialrichtung verdickten ersten Ende 50 verläuft. Das erste Ende 50 hat eine radial nach außen offene Aufnahme 52 für einen elastischen Ring 12, hier einen Dichtring. In der dargestellten Ausführungsform, die nicht einschränkend zu verstehen ist, ist das erste Ende 50 im Bereich der Aufnahme 52 radial nach außen offen und C-förmig gestaltet.

Zwischen dem Schwenklager 48 und dem entgegengesetzten, zweiten Ende 56 jedes Halters 46 kann ein Antrieb an dem Halter 46 angreifen, wobei in der vorliegenden Ausführungsform symbolisch ein Federantrieb 58 vorgesehen ist, der im Träger 34 sitzt und den Halter 46 so beaufschlagt, dass dessen erstes Ende 50 bestrebt ist, nach außen zu schwenken.

Jeder Halter 46 hat eine radiale Ausrichtung bezüglich seiner Schwenkbarkeit und auch einen entsprechenden Antrieb 58.

In der in den Figuren 2 und 3 dargestellten Ausführung ist der elastomere Ring 12 in den Aufnahmen 52 der drei Halter 46 eingesetzt. Diejenigen Bereiche des Rings 12, die in den Aufnahmen 52 liegen, bilden die Haltebereiche 54 des Rings 12.

Die Auslenkung der Halter 46 nach außen ist so auf die montierbaren Ringgrößen abgestimmt, dass dann, wenn die Halter 46 nach außen geschwenkt und noch nicht in das Mundstück 18 eingeführt sind, sämtliche mit der Vorrichtung verbaubaren Ringe 12 durch die Federwirkung der Halter 46 nach außen gedehnt sind und somit verliersicher in den Aufnahmen 52 sitzen.

Anschließend wird, wie in den Figuren 2 und 3 zu erkennen, die Einheit aus Träger 34, Schieber 40 und Halter 46 samt aufgenommenem Ring 12 in das Mundstück 18 geschoben, wobei die Führungsöffnung 20 im Bereich des Einlassendes 28 größer als die radial am weitesten außenliegenden Abschnitte der Halter 46 (genauer gesagt deren kreiszylindrische Ummantelnde) ist.

Die zuvor erwähnte Einheit wird tiefer in die Führungsöffnung 20 eingeschoben, sodass die Halter 46 im Bereich angrenzend an ihre Aufnahmen 52 an der Innenseite der Wand 30 anliegen und die Wand des Mundstücks 18 somit die Aufnahmen 52 zumindest so weit schließt, dass der Ring trotz Einfederns der Halter 46 im Bereich der ersten Enden 50 nicht mehr aus den Aufnahmen 52 herausgleiten kann.

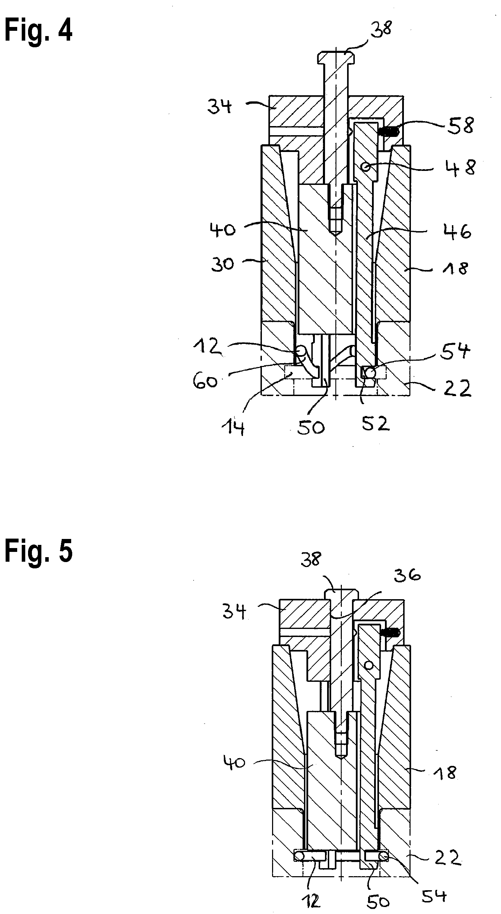

Mit zunehmender Verengung der Führungsöffnung 20 wird die Reibung der Bereiche des Ringes 12 zwischen den Haltebereichen 54 an der Innenseite der Wand 30 immer größer, was dazu führt, dass diese Bereiche entgegen der Einführrichtung B der vorgenannten Einheit gebogen werden und sich, wie dies in Figur 4 zu erkennen ist, nacheilende, gebogene Bereiche 60 zwischen den Haltebereichen des Ringes 12 ergeben.

Wenn der Ring 12 dann den kreiszylindrischen Abschnitt 32 der Führungsöffnung 20 erreicht hat, hat er eine Wellen- oder Kronenform, d. h., sein Außendurchmesser ist verringert, jedoch ist er aus der früheren Ringebene heraus in Axialrichtung gebogen.

Die Einheit aus Haltern 46 und nacheilendem Schieber 40 wird immer tiefer in die Führungsöffnung 20 hineinbewegt, bis die Halter 46 schließlich den Ring 12 in die Werkstücköffnung 16 und bis zur Nut 14 ziehen, wie dies in Figur 4 dargestellt ist. Dann schlägt der Träger 34 stirnseitig an dem Mundstück 18 an. Die Länge der Halter 46 und die Position ihrer Aufnahmen 52 sind so auf die Vorrichtung und die axiale Position der Nut 14 in der Werkstücköffnung 16 abgestimmt, dass dann, wenn der Anschlag erreicht ist, die Aufnahmen 52 axial auf Höhe der Nut 14 liegen.

Bei der dargestellten Ausführungsform liegen alle Aufnahmen 52 in einer gemeinsamen Radialebene, sodass in der Position gemäß Figur 4 sämtliche Haltebereiche 54 des Rings 12 in dem Nutbereich liegen und die Haltebereiche 54 durch die Eigenelastizität des Rings 12 in die Nut 14 springen.

Bei der dargestellten Ausführungsform sind sämtliche Halter 46 gleichzeitig axial bewegt, sie könnten jedoch auch nacheinander axial verfahren werden, oder die Aufnahmen 52 könnten axial versetzt zueinander liegen. Auch ein gruppenweises gemeinsames Fahren von Haltern ist denkbar.

Um die nacheilenden, gebogenen Bereiche auf die axiale Höhe der Nut 14 zu bringen, sodass diese in die Nut 14 hineindrücken, wird anschließend der zuvor noch gemeinsam mit den Haltern 46 bewegte Schieber 40 separat in Bewegung versetzt.

Wie in Figur 3 zu sehen ist, liegt die Kontaktfläche 42 in der Ausgangsposition axial von den Aufnahmen 52 versetzt, denn diese stehen in Richtung zum Werkstück 22 gegenüber dem Schieber 40 vor.

Durch Betätigung des Betätigungsstößels 38 in Einführrichtung B wird der Schieber anschließend nach unten auf die gebogenen Bereiche 60 des Rings 12 zubewegt, kontaktiert diese mit der Kontaktfläche 42 und schiebt sie schließlich zur Nut 14, wo sie dann radial nach außen federn und in die Nut gelangen. In dieser Position ist dann auch ein Anschlag für den Schieber 40 vorgesehen, hier beispielsweise durch einen Kopf am Antriebsstößel 38.

Die gesamte Vorrichtung kann nun vom Werkstück 22 abgezogen werden.

Die Montage mittels der Vorrichtung kann vollautomatisch und motorgetrieben erfolgen, durch entsprechendes Vorsehen von Antrieben für die Halter 46, für den Schieber 40 und für den Träger 34. Um sich entsprechende Motoren sparen zu können, können sich bewegende Teile durch Kulissenführungen oder Gestänge miteinander mechanisch, auch starr oder schwenkbar, gekoppelt sein. Als Antriebe können insbesondere pneumatische Antriebe, aber auch hydraulische oder elektrische Antriebe verwendet werden.

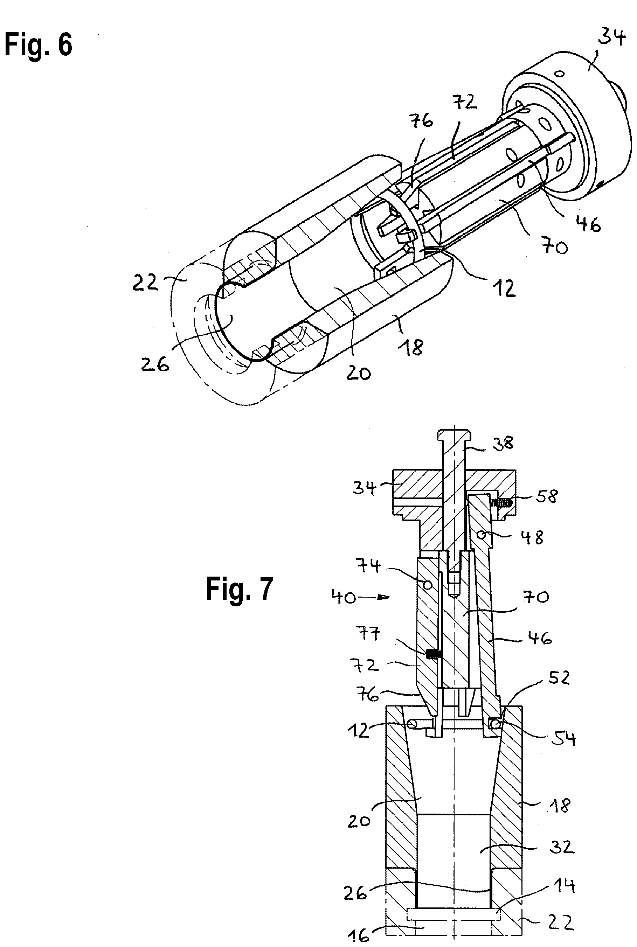

Die in den Figuren 6 bis 9 dargestellte erste Ausführungsform entspricht im Wesentlichen dem in den Figuren 1 bis 5 dargestellten Beispiel, sodass im Folgenden ausschließlich auf die Unterschiede eingegangen wird.

Der hier vorgesehene Unterschied besteht in der Ausbildung des Schiebers 40. Der Schieber 40 ist hier mehrteilig ausgeführt, mit einem zentrischen, im Wesentlichen stangenartigen Basiskörper 70, an dem der Stößel 38 befestigt ist. Am Basiskörper 70 sind Schieberfinger 72 am Umfang verteilt, die als Wippen ausgebildet und mit ihrem Schwenklager 74 in Schlitzen im Basiskörper 70 radial nach außen und nach innen schwenkbar gelagert sind.

Auch hier ist ein Antrieb 77, beispielsweise in Form einer Feder, vorhanden, der bestrebt ist, seinen Schieberfinger 72 radial nach außen zu schwenken. Auch hier können natürlich andere Antriebe, auch aktive und schaltbare Antriebe, zur Realisierung der Schwenkbewegung verwendet werden. Ziel ist es, eine vollautomatische Montage mittels der dargestellten Vorrichtung zu erreichen.

Die Antriebe 77 wirken zwischen den Schieberfingern 72 und dem Basiskörper 70, zumindest in der dargestellten Variante. Die dem Werkstück 22 zugewandten Enden der Schieberfinger 72 haben außenseitig eine zu ihrem Ende radial nach innen verlaufende Rampenfläche 76, die in der Ausgangsstellung vor den Aufnahmen 52 der Halter 46 enden (siehe Figur 7). Die Rampenflächen 76 liegen derart, dass, in Axialrichtung gesehen, ihre Enden radial einwärts des Ringes 12 liegen (siehe auch Figur 6).

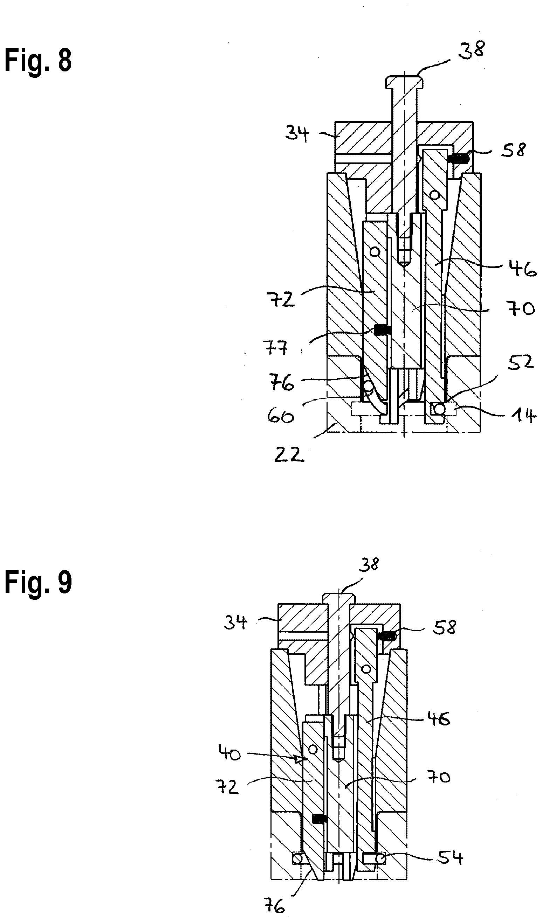

Wie anhand von Figur 3 bereits erläutert, wird die Einheit samt Ring 12 in das Mundstück 18 geschoben, bis die Aufnahmen 52 die Nut 14 erreicht haben (siehe Figur 8) und die Haltebereiche 54 in die Nut 14 springen. Anschließend wird über den Stößel 38 der Schieber 40 nach unten geschoben, wobei die Rampenflächen 76 die nacheilenden, gebogenen Bereiche 60 in Richtung Nut schieben und, mit Erreichen der Nut 14, auch nach außen drücken (siehe Figur 9).

Aufgrund der federnd angestellten Schieberfinger 72 liegen diese stets an der Innenseite der Führungsöffnung 20 und der Innenseite der Werkstücköffnung an.

Die Steilheit der Rampenfläche 76 muss natürlich auf die Abmessungen des Rings 12 abgestimmt sein, um diesen nicht zu klemmen oder abzuscheren, wenn der Schieber 40 axial relativ zu den Haltern 46 und dem Ring 12 verfahren wird.

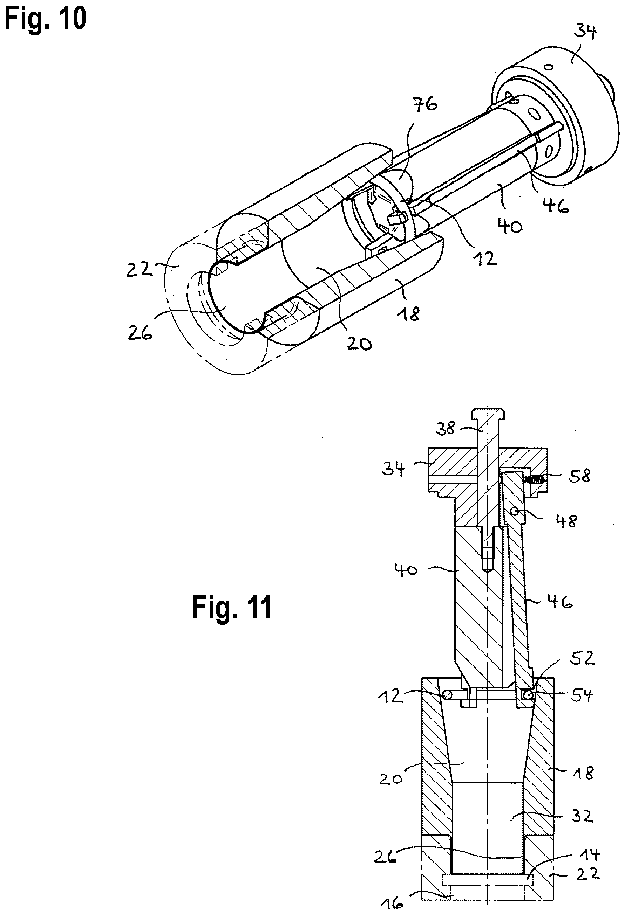

Die Ausführungsform nach den Figuren 10 bis 14 entspricht ebenfalls bis auf die nachfolgenden Änderungen im Schieber 40 den zuvor beschriebenen Ausführungsformen.

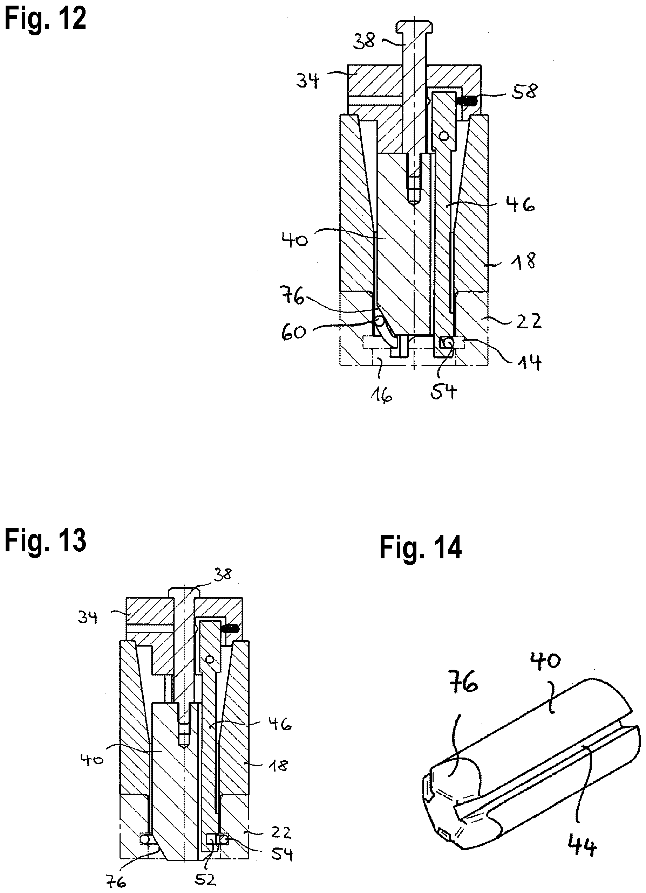

Der Schieber 40 ist hierbei vom Grundprinzip her ähnlich zum Schieber 40 nach der ersten Ausführungsform. Jedoch ist die Kontaktfläche 42 nicht wie in Figur 3 zu sehen in einer Radialebene zur Achse A gelegen und plan ausgeführt, sondern ist als Rampenfläche 76 ausgebildet. Aufgrund der kreiszylindrischen Grundform des Schiebers 40 (siehe auch Figur 14) ergibt sich eine Rampenfläche 76, die in Axialrichtung unterschiedlich lang verläuft. Der Vorteil hierbei besteht darin, dass die nacheilenden, gebogenen Bereiche 60 nicht nur punktuell, sondern innenseitig fast auf ihrer gesamten Länge an der Rampenfläche 76 anliegen, wie dies in Figur 12 angedeutet ist.

Ansonsten zeigen die Figuren 10 bis 13 die verschiedenen Stufen beim Einsetzen eines elastischen Ringes mithilfe der Vorrichtung gemäß der dritten Ausführungsform.

Aufgrund der mehreren Halter 46 und ihrer Elastizität, vor allem aber aufgrund der durch die Vorrichtung hervorgerufenen dreidimensionalen Wellen- oder Kronenform des Ringes 12 beim Durchführen durch das Mundstück 18 und die Werkstücköffnung 16, lassen sich mit derselben Vorrichtung unterschiedliche Ringe in unterschiedlich dimensionierten Nuten 14 und Werkstücköffnungen 16 montieren. Auch lassen sich Abstandshalter zwischen den Anschlägen vorsehen, um die axiale Lage der Aufnahme 52 und des Schiebers 40 zur Nut 14 einzustellen. Bei motorischem Antrieb kann eine entsprechende Steuerung beispielsweise eines Motors, insbesondere eines Servomotors, die Aufgabe von Anschlägen übernehmen.

Natürlich hat jede Vorrichtung nur ihren bestimmten Bereich von Dimensionen von Ringen, Nuten und Durchmessern, die sie abdecken kann und mithilfe derer entsprechende Ringe in Nuten montiert werden können. Jedoch lässt sich auf sehr leichte Weise ein Baukastensystem bilden, indem unterschiedliche Mundstücke 18 mit unterschiedlichen Querschnitten von Führungsöffnungen 20 realisiert werden, die allesamt mit derselben Einheit aus Haltern 46, Träger 34 und Stößel 38 koppelbar sind. Bei der zweiten Ausführungsform ist im Übrigen der Schieber 40 durch die federnden Schieberfinger 72 in seinem Wirkdurchmesser variabel. Natürlich lassen sich diese Schieberfinger auch ohne die Rampenfläche 76 ausbilden, sodass eine in einer Radialebene liegende Kontaktfläche ausgebildet ist.

## Patentansprüche

1. Vorrichtung zum Einsetzen eines elastischen Ringes (12) in eine innenliegende Nut (14) in einer Werkstücköffnung (16), mit
- wenigstens zwei umfangsmäßig voneinander beabstandeten, bezogen auf eine axiale Einführrichtung (B) in die Werkstücköffnung (16) hinein verschiebbaren Haltern (46), die jeweils eine radial nach außen offene Aufnahme (52) für Haltebereiche (54) am Ring (12) haben,
- wobei die Vorrichtung so ausgebildet ist, dass sich der in den Aufnahmen (52) sitzende Ring (12) zwischen seinen Haltebereichen (54) in Seitenansicht zu einer Wellenform verformen kann, um nacheilende, gebogene Bereiche (60) zu bilden, und
- wenigstens einem Schieber (40) zum Schieben der nacheilenden, gebogenen Bereiche (60) in Richtung der innenliegenden Nut (14), wobei die Vorrichtung so ausgebildet ist, dass der Schieber (40) gegenüber den Aufnahmen (52) nacheilend in die Werkstücköffnung (16) verfahrbar ist,
**dadurch gekennzeichnet, dass**
der Schieber (40) eine Rampenfläche (76) aufweist, die so ausgebildet ist, dass sie nacheilende, gebogene Bereiche (60) des Rings (12) in die Nut (14) schiebt.

2. Vorrichtung nach Anspruch 1, **dadurch gekennzeichnet, dass** die Halter (46) über den Umfang gleichmäßig oder ungleichmäßig verteilt sind.

3. Vorrichtung nach einem der vorhergehenden Ansprüche, **dadurch gekennzeichnet, dass** der wenigstens eine Schieber (40) und die Halter (46) nacheinander axial verfahrbar sind, insbesondere unabhängig voneinander.

4. Vorrichtung nach einem der vorhergehenden Ansprüche, **dadurch gekennzeichnet, dass** die Halter (46) alle gemeinsam, in Gruppen gemeinsam oder unabhängig voneinander axial und/oder radial relativ zum Rest der Vorrichtung beweglich gelagert sind, insbesondere dass zumindest ein Antrieb zum Bewegen der Halter (46) relativ zum Rest der Vorrichtung vorgesehen ist.

5. Vorrichtung nach einem der vorhergehenden Ansprüche, **dadurch gekennzeichnet, dass** die Halter (46) im Bereich der Aufnahmen (52) radial nach außen beweglich sind, insbesondere radial nach außen federnd vorgespannt sind.

6. Vorrichtung nach einem der vorhergehenden Ansprüche, **dadurch gekennzeichnet, dass** ein Träger (34) vorgesehen ist, an dem die Halter (46) gelagert sind, insbesondere schwenkbar gelagert sind.

7. Vorrichtung nach einem der vorhergehenden Ansprüche, **dadurch gekennzeichnet, dass** der zumindest eine Schieber (40) zumindest während der Verschiebebewegung in die Werkstücköffnung (16) radial zwischen den Haltern (46) angeordnet ist, und/oder einen Schlitz (44) zur Aufnahme zumindest eines Halters (46) hat.

8. Vorrichtung nach einem der vorhergehenden Ansprüche, **dadurch gekennzeichnet, dass** der zumindest eine Schieber (40) radial nach außen bewegliche Kontaktflächen hat, zum Verändern der radialen Ausdehnung des Schiebers (40), wobei die Kontaktflächen die Rampenflächen (76) aufweisen.

9. Vorrichtung nach Anspruch 8, **dadurch gekennzeichnet, dass** der Schieber (40) mehrteilig ausgebildet ist und radial nach außen und nach innen schwenkbar gelagerte Schieberfinger (72) hat, wobei die dem Werkstück (22) zugewandten Enden der Schieberfinger (72) außenseitig die Rampenfläche (76) haben, welche zum Ende des zugeordneten Schiebefingers (72) radial nach innen verlaufen, und wobei, in Axialrichtung gesehen, die Enden der Rampenflächen (76) radial einwärts des Ringes (12) liegen.

10. Vorrichtung nach einem der Ansprüche 1 bis 7, **dadurch gekennzeichnet, dass** der kreiszylindrische Schieber (40) an seinem dem Werkstück zugewandten Ende die als Kontaktfläche (42) für den Ring (12) ausgebildete Rampenfläche (76) besitzt.

11. Vorrichtung nach einem der vorhergehenden Ansprüche, **dadurch gekennzeichnet, dass** ein Mundstück (18) mit einer Führungsöffnung (20) zum Durchschieben des Rings (12) in Richtung zur Werkstücköffnung (16) und zum Verformen des Rings (12) vorgesehen ist, wobei die Halter (46) samt eingesetztem Ring (12) und Schieber (40) durch die Führungsöffnung (20) axial hindurchgeschoben werden können.

12. Vorrichtung nach Anspruch 11, **dadurch gekennzeichnet, dass** die Führungsöffnung (20) ein dem Werkstück (22) zugewandtes Auslassende (24) und ein dem Werkstück (22) abgewandtes Einlassende (28) hat, wobei sich die Führungsöffnung (20) zumindest abschnittsweise in Richtung zum Auslassende (24) verengt, insbesondere wobei sich die Führungsöffnung konisch oder kegelförmig verjüngt oder innenseitig vorstehende Rippen aufweist, deren radiale Innenseite in Richtung zum Auslassende (24) hin zumindest abschnittsweise näher zur Mittelachse (A) der Führungsöffnung (20) verläuft.

13. Vorrichtung nach Anspruch 12, **dadurch gekennzeichnet, dass** die Rippen Gleitleisten sind, die an einer Wand des Mundstücks (18) angebracht und insbesondere als Drahtbiegeteil ausgeführt sind, und/oder dass das Mundstück (18) als im 3D-Druck hergestelltes Teil ausgeführt ist.

14. Baukastensystem, mit einer Vorrichtung nach einem der Ansprüche 11-13, **gekennzeichnet durch** mehrere Mundstücke (18), die sich durch unterschiedliche Durchmesser der Führungsöffnungen (20) im Bereich des Auslassendes (24) unterscheiden, wobei Schieber (40) und Halter (46) mit jedem der Mundstücke (18) koppelbar sind, sodass die Halter (46) beim Einschieben angrenzend an ihre Aufnahmen (52) die Innenseite der die Führungsöffnungen (20) bildenden Wand (30) des Mundstücks (18) kontaktieren können.

15. Verfahren zum Einsetzen eines elastischen Rings (12) in eine innenliegende Nut (14) in einer Werkstücköffnung (16), unter Verwendung der Vorrichtung nach einem der Ansprüche 1 bis 13, **gekennzeichnet durch** folgende Schritte:
- der elastische Ring (12) wird von seiner radialen Innenseite aus mit Haltebereichen (54) in nach außen offene Aufnahmen (52) von Haltern (46) eingesetzt,
- die Halter (46) werden in eine Führungsöffnung (20) eines Mundstücks (18) bewegt, wobei die Führungsöffnung (20) durch eine Wandinnenseite begrenzt ist,
- wobei sich die Führungsöffnung (20) zumindest abschnittsweise in Richtung zu ihrem dem Werkstück zugewandten Auslassende (24) verengt und die Halter (46) im Mundstück so positioniert werden, dass der elastische Ring (12) die Wandinnenseite mit seinen zwischen den Haltebereichen (54) liegenden Bereichen (60) berühren kann und diese Bereiche (60) beim Bewegen in das Mundstück (18) hinein entgegen der Einführrichtung (B) gebogen werden und nacheilende, gebogene Bereiche (60) bilden,
- der Ring (12) wird mittels der Halter (46) durch das Mundstück (18) hindurch in die Werkstücköffnung (16) bewegt,
- im Bereich der Nut (14) werden die Haltebereiche (54) in die Nut (14) überführt, und
- wenigstens ein Schieber (40) wird in die Werkstücköffnung (16) bewegt, um die nacheilenden, gebogenen Bereiche (60) axial zur Nut (14) zu drücken, wobei der Schieber (40) mittels der Rampenfläche (76) die nacheilenden, gebogene Bereiche (60) des Rings (12) in die Nut (14) schiebt.

## Claims

1. A device for inserting an elastic ring (12) into an internal groove (14) in a workpiece opening (16), comprising
- at least two retainers (46) that are circumferentially spaced apart from one another and can slide into the workpiece opening (16) with regard to an axial insertion direction (B), each of the retainers having a radially outwardly open recess (52) for retaining regions (54) on the ring (12),
- wherein the device is configured such that the ring (12) that is seated in the recesses (52) can deform between its retaining regions (54) to form a wavy shape as seen in a lateral view, in order to form trailing, curved regions (60), and
- at least one slider (40) for pushing the trailing, curved regions (60) in the direction towards the internal groove (14), wherein the device is configured such that the slider (40) can be moved into the workpiece opening (16) in a trailing manner with respect to the recesses (52),
**characterized in that**
the slider (40) includes an inclined surface (76) which is configured to push trailing curved regions (60) of the ring (12) into the groove (14).

2. The device according to claim 1, **characterized in that** the retainers (46) are circumferentially distributed uniformly or non-uniformly.

3. The device according to either of the preceding claims, **characterized in that** the at least one slider (40) and the retainers (46) are adapted to be moved axially one after the other, in particular independently of one another.

4. The device according to any of the preceding claims, **characterized in that** the retainers (46), all together, jointly in groups or independently of one another, are mounted so as to be movable axially and/or radially relative to the rest of the device, in particular **in that** at least one actuator is provided for moving the retainers (46) relative to the rest of the device.

5. The device according to any of the preceding claims, **characterized in that** the retainers (46) can be moved radially outwards in the region of the recesses (52), in particular are pretensioned radially outwards in a resilient manner.

6. The device according to any of the preceding claims, **characterized in that** a carrier (34) is provided at which the retainers (46) are mounted, in particular pivotably mounted.

7. The device according to any of the preceding claims, **characterized in that** the at least one slider (40) is arranged radially between the retainers (46) at least during the insertion movement into the workpiece opening (16) and/or has a slot (44) for receiving at least one retainer (46).

8. The device according to any of the preceding claims, **characterized in that** the at least one slider (40) has contact surfaces that are movable radially outwards, for changing the radial expansion of the slider (40), the contact surfaces including the inclined surfaces (76).

9. The device according to claim 8, **characterized in that** the slider (40) has a multipart configuration and has slider fingers (72) that are mounted so as to be swiveled radially outwards and inwards, the ends of the slider fingers (72) facing the workpiece (22) having the inclined surfaces (76) on the outer face, which extend radially inwards towards the end of the associated slider finger (72), and the ends of the inclined surfaces (76) being located radially inwardly of the ring (12), as seen in the axial direction.

10. The device according to any of claims 1 to 7, **characterized in that** the circular cylindrical slider (40) has, at its end facing the workpiece, the inclined surface (76) formed as a contact surface (42) for the ring (12).

11. The device according to any of the preceding claims, **characterized in that** a mouthpiece (18) is provided which has a guiding aperture (20) for the ring (12) to be pushed through in the direction towards the workpiece opening (16) and for deforming the ring (12), wherein the retainers (46) together with the inserted ring (12) and the slider (40) can be pushed axially through the guiding aperture (20).

12. The device according to claim 11, **characterized in that** the guiding aperture (20) has an outlet end (24) facing the workpiece (22) and an inlet end (28) facing away from the workpiece (22), wherein the guiding aperture (20) narrows at least in sections in the direction towards the outlet end (24), in particular wherein the guiding aperture tapers conically or in the shape of a cone or includes ribs that protrude on the inside and whose radial inner surface extends in the direction towards the outlet end (24) closer to the central axis (A) of the guiding aperture (20) at least in sections.

13. The device according to claim 12, **characterized in that** the ribs are sliding strips that are mounted to a wall of the mouthpiece (18) and, in particular, are configured as a bent wire part, and/or **in that** the mouthpiece (18) is configured as a part produced by 3D printing.

14. A modular construction system, comprising a device according to any of claims 11 to 13, **characterized by** a plurality of mouthpieces (18) which differ by different diameters of the guiding apertures (20) in the region of the outlet end (24), wherein the slider (40) and the retainers (46) can be coupled to each of the mouthpieces (18) so that during insertion, the retainers (46) can make contact adjacent to their recesses (52) with the inner face of the wall (30) of the mouthpiece (18), the wall forming the guiding apertures (20).

15. A method for inserting an elastic ring (12) into an internal groove (14) in a workpiece opening (16), using the device according to any of claims 1 to 13, **characterized by** the following steps:
- the elastic ring (12) is inserted from its radial inner surface by retaining regions (54) into outwardly open recesses (52) of retainers (46),
- the retainers (46) are moved into a guiding aperture (20) of a mouthpiece (18), wherein the guiding aperture (20) is delimited by a wall inner face,
- wherein the guiding aperture (20) narrows at least in sections in the direction towards its outlet end (24) that faces the workpiece, and the retainers (46) are positioned in the mouthpiece in such a manner that the elastic ring (12) can contact the wall inner face by its regions (60) located between the retaining regions (54), and these regions (60) are bent in the direction opposite to the insertion direction (B) during the movement into the mouthpiece (18) and form trailing, curved regions (60),
- the ring (12) is moved through the mouthpiece (18) into the workpiece opening (16) by means of the retainers (46),
- in the region of the groove (14), the retaining regions (54) are transferred into the groove (14), and
- at least one slider (40) is moved into the workpiece opening (16) in order to push the trailing, curved regions (60) axially towards the groove (14), the slider (40) pushing the trailing, curved regions (60) of the ring (12) into the groove (14) by means of the inclined surface (76).

## Revendications

1. Dispositif pour l'insertion d'un anneau élastique (12) dans une rainure intérieure (14) dans un orifice (16) d'une pièce à usiner, comprenant
- au moins deux moyens de retenue (46) circonférentiellement espacés l'un de l'autre qui sont aptes à être glissés dans l'orifice (16) de la pièce à usiner par rapport à un sens d'insertion axial (B) et qui présentent chacun un logement (52) ouvert radialement vers l'extérieur pour des zones de retenue (54) sur l'anneau (12),
- le dispositif étant réalisé de sorte que l'anneau (12) placé dans les logements (52) est apte à se déformer entre ses zones de retenue (54) en une forme ondulée dans une vue latérale, pour former des zones courbes (60) décalées vers l'arrière, et
- au moins un coulisseau (40) pour glisser les zones courbes (60) décalées vers l'arrière en direction de la rainure intérieure (14), le dispositif étant réalisé de sorte que le coulisseau (40) est apte à être déplacé dans l'orifice (16) de la pièce à usiner de manière décalée vers l'arrière par rapport aux logements (52),
**caractérisé en ce que**
le coulisseau (40) présente une surface de rampe (76) qui est réalisée de manière à glisser des zones courbes (60) décalées vers l'arrière de l'anneau (12) dans la rainure (14).

2. Dispositif selon la revendication 1, **caractérisé en ce que** les moyens de retenue (46) sont répartis sur la périphérie de manière régulière ou irrégulière.

3. Dispositif selon l'une des revendications précédentes, **caractérisé en ce que** ledit au moins un coulisseau (40) et les moyens de retenue (46) sont aptes à être déplacés axialement les uns après les autres, en particulier indépendamment les uns des autres.

4. Dispositif selon l'une des revendications précédentes, **caractérisé en ce que** les moyens de retenue (46) sont montés de manière à être tous ensemble, ensemble en groupe ou indépendamment les uns des autres axialement et/ou radialement mobiles par rapport au reste du dispositif, en particulier **en ce qu'**il est prévu au moins un entraînement pour le déplacement des moyens de retenue (46) par rapport au reste du dispositif.

5. Dispositif selon l'une des revendications précédentes, **caractérisé en ce que** les moyens de retenue (46), dans la zone des logements (52), sont mobiles radialement vers l'extérieur et sont en particulier élastiquement précontraints radialement vers l'extérieur.

6. Dispositif selon l'une des revendications précédentes, **caractérisé en ce qu'**il est prévu un support (34) sur lequel les moyens de retenue (46) sont montés, en particulier montés à pivotement.

7. Dispositif selon l'une des revendications précédentes, **caractérisé en ce que** ledit au moins un coulisseau (40) est agencé radialement entre les moyens de retenue (46) au moins pendant le mouvement de déplacement dans l'orifice (16) de la pièce à usiner, et/ou présente une fente (44) pour le logement d'au moins un moyen de retenue (46).

8. Dispositif selon l'une des revendications précédentes, **caractérisé en ce que** ledit au moins un coulisseau (40) présente des surfaces de contact mobiles radialement vers l'extérieur pour modifier l'extension radiale du coulisseau (40), les surfaces de contact présentant les surfaces de rampe (76).

9. Dispositif selon la revendication 8, **caractérisé en ce que** le coulisseau (40) est réalisé en plusieurs pièces et présente des doigts de coulisseau (72) montés de manière pivotante radialement vers l'extérieur et vers l'intérieur, les extrémités des doigts de coulisseau (72) tournées vers la pièce à usiner (22) présentant du côté extérieur les surfaces de rampe (76) qui s'étendent radialement vers l'intérieur en direction de l'extrémité du doigt de coulisseau (72) associé, et les extrémités des surfaces de rampe (76), vues dans le sens axial, étant agencées radialement à l'intérieur de l'anneau (12).

10. Dispositif selon l'une des revendications 1 à 7, **caractérisé en ce que** le coulisseau (40) cylindrique circulaire présente à son extrémité tournée vers la pièce à usiner la surface de rampe (76) réalisée sous forme de surface de contact (42) pour l'anneau (12).

11. Dispositif selon l'une des revendications précédentes, **caractérisé en ce qu'**il est prévu un bec (18) qui présente un orifice de guidage (20) pour glisser l'anneau (12) en direction de l'orifice (16) de la pièce à usiner et pour déformer l'anneau (12), les moyens de retenue (46), y compris l'anneau (12) inséré et le coulisseau (40), étant aptes à être glissés axialement à travers l'orifice de guidage (20).

12. Dispositif selon la revendication 11, **caractérisé en ce que** l'orifice de guidage (20) présente une extrémité de sortie (24) tournée vers la pièce à usiner (22) et une extrémité d'entrée (28) détournée de la pièce à usiner (22), l'orifice de guidage (20) se rétrécissant au moins par tronçons en direction de l'extrémité de sortie (24), l'orifice de guidage s'amincissant de manière conique ou en forme de cône ou présentant des ailettes en saillie vers l'intérieur, dont la face intérieure radiale s'étend en direction de l'extrémité de sortie (24) au moins par tronçons plus proche de l'axe médian (A) de l'orifice de guidage (20).

13. Dispositif selon la revendication 12, **caractérisé en ce que** les ailettes sont des nervures coulissantes qui sont agencées sur une paroi du bec (18) et qui sont en particulier réalisées sous forme de pièce en fil pliée, et/ou **en ce que** le bec (18) est réalisé sous forme de pièce produite par impression 3D.

14. Système modulaire, comportant un dispositif selon l'une des revendications 11 à 13, **caractérisé par** plusieurs becs (18) qui se distinguent par différents diamètres des orifices de guidage (20) dans la zone de l'extrémité de sortie (24), le coulisseau (40) et les moyens de retenue (46) étant aptes à être couplés à chaque bec (18) de sorte que les moyens de retenue (46), lors de l'insertion, peuvent contacter la face intérieure de la paroi (30) du bec (18) formant les orifices de guidage (20) au voisinage de leurs logements (52).

15. Procédé d'insertion d'un anneau élastique (12) dans une rainure intérieure (14) dans un orifice (16) d'une pièce à usiner en utilisant un dispositif selon l'une des revendications 1 à 13, **caractérisé par** les étapes suivantes :
- l'anneau élastique (12) est inséré depuis sa face intérieure radiale avec des zones de retenue (54) dans des logements (52) ouverts vers l'extérieur de moyens de retenue (46),
- les moyens de retenue (46) sont déplacés dans un orifice de guidage (20) d'un bec (18), l'orifice de guidage (20) étant délimité par une face intérieure de paroi,
- l'orifice de guidage (20) se rétrécissant au moins par tronçons en direction de son extrémité de sortie (24) tournée vers la pièce à usiner, et les moyens de retenue (46) étant positionnés dans le bec de sorte que l'anneau élastique (12) peut toucher la face intérieure de paroi avec ses zones (60) agencées entre les zones de retenue (54), et ces zones (60) étant pliées à l'encontre du sens d'insertion (B) lors du déplacement dans le bec (18) et formant des zones courbes (60) décalées vers l'arrière,
- l'anneau (12) est déplacé à travers le bec (18) dans l'orifice (16) de la pièce à usiner en utilisant les moyens de retenue (46),
- les zones de retenue (54) sont transférées dans la rainure (14) dans la zone de la rainure (14), et
- au moins un coulisseau (40) est déplacé dans l'orifice (16) de la pièce à usiner pour presser les zones courbes (60) décalées vers l'arrière axialement vers la rainure (14), le coulisseau (40) glissant les zones courbes (60) décalées vers l'arrière de l'anneau (12) dans la rainure (14) au moyen de la surface de rampe (76).
